# EUROPEAN PATENT APPLICATION

(11) **EP 4 485 769 A1**
(43) Date of publication of application: **01.01.2025**
(21) Application number: 22928920.2
(22) Date of filing: 08.12.2022
(51) Int. Cl.: H02K 15/02, H02K 1/18, H02K 3/12, H02K 3/34

(54) **APPARATUS FOR MANUFACTURING STATOR, METHOD FOR MANUFACTURING STATOR, AND STATOR**

(30) Priority: 24.02.2022 JP 2022027045
(71) Applicant: NHK Spring Co., Ltd., Kanagawa 236-0004 (JP)
(72) Inventor: KAMEDA, Yohei, Yokohama-shi, Kanagawa 236-0004 (JP); YODA, Yu, Yokohama-shi, Kanagawa 236-0004 (JP)
(74) Representative: DREISS Patentanwälte PartG mbB
(86) International application number: PCT/JP2022/045350
(87) International publication number: WO 2023/162403

(57) **Abstract**

An apparatus for manufacturing a stator that includes a stator core, in which a plurality of core pieces formed of electrical steel sheets are stacked, and coils inserted into slots of the stator core. The apparatus for manufacturing a stator includes a pair of coil holding jigs and an activation mechanism. The coil holding jigs hold, of the coils disposed in the slots, coil ends projecting from both of axial direction end portions of the stator core. The activation mechanism rotates at least one of the pair of coil holding jigs holding the coil ends in a circumferential direction of the stator, in order to form skew in the stator.

## Description

### Technical Field

The present disclosure relates to an apparatus for manufacturing a stator, a method for manufacturing a stator, and a stator.

### Background Art

Forming skew at a rotor or stator of a rotating electrical machine such as, for example, an induction motor, in order to suppress noise, vibrations and the like caused by cogging torque, torque ripple and the like has been known since heretofore. As a method of forming skew at a stator, for example, a method is known of skewing (slanting) slots in a stator core in advance, inserting linear coils in the slots, and deforming the coils to slant along the shapes of the slots.

International Patent Publication No. 2019/142663 recites, as an alternative method for forming skew in a stator, a method of forming a stator core by stacking plural electrical steel sheets, disposing coils in slots in the stator core, and pressing a skew-forming mechanism portion provided at an outer periphery face or inner periphery face of the stator core with a skew-forming jig.

### SUMMARY OF INVENTION

### Technical Problem

In the above-described method of forming skew by inserting linear coils into slots of a stator core that are skewed in advance, large frictional forces may occur between the coils and the slot when the coils are inserted, and insulating covers of the coil surfaces may be damaged.

In a method of forming skew by pressing a stator core after coils are inserted into slots, such as the method in International Patent Publication No. 2019/142663, it is necessary to provide skew-forming mechanism portions (for example, grooves or protrusions) in the outer periphery face or inner periphery face of the stator core, and the shape of the stator core is complex. Moreover, coil ends of the coils inserted in the slots are inclined in accordance with a skew angle. There may be inconsistencies in the inclination, neighboring coils may interfere with one another, and insulating layers at the coil surfaces may be damaged. In particular, when flat wire coils are used as the coils, consistent insulation processing of the coil surfaces after the skew is formed is difficult. Therefore, suppressing a fall in insulation resistance that is caused by damage to insulating layers or the like is necessary.

In consideration of the problem described above, an object of the present disclosure is to provide an apparatus for manufacturing a stator, a method for manufacturing a stator, and a stator that enable formation of skew in a stator while suppressing a fall in insulation resistance of coils.

### Solution to Problem

To achieve the object described above, an apparatus for manufacturing a stator according to a first aspect of the present disclosure, the stator including a stator core in which plural core pieces formed of electrical steel sheets are stacked and coils inserted into slots of the stator core, includes: a pair of coil holding jigs that hold, of the coils disposed in the slots, coil ends projecting from both of axial direction end portions of the stator core; and an activation mechanism for forming skew in the stator, the activation mechanism rotating at least one of the pair of coil holding jigs holding the coil ends in a circumferential direction of the stator.

In the apparatus for manufacturing a stator as described above, the coil holding jig(s) holding the coil ends is/are rotated, and the core pieces are rotated following the rotation of the coils. Thus, skew may be formed in the stator. Because the core pieces are simply stacked on one another and not fixed to one another or the like, no large frictional forces are generated between the coils and the core pieces. Moreover, because the coils are skewed in the state in which they are held by the coil holding jigs, there is no inconsistency in inclination of the coils and interference between the coil ends may be prevented. Therefore, damage to insulating covers of the coils may be suppressed.

In an apparatus for manufacturing a stator according to a second aspect of the present disclosure, in the apparatus for manufacturing a stator according to the first aspect of the present disclosure: the activation mechanism rotates both of the pair of coil holding jigs holding the coil ends in the circumferential direction of the stator; and the apparatus for manufacturing a stator further includes a rotation limiting member that, of the plural core pieces, braces a predetermined number of the core pieces disposed at an axial direction central portion of the stator core to be non-rotatable.

In the apparatus for manufacturing a stator as described above, because rotation of the predetermined number of core pieces disposed at the axial direction central portion of the stator core is limited by the rotation limiting member, a substantially "V"-shaped skew as seen in the diametric direction of the stator may be formed simply.

In an apparatus for manufacturing a stator according to a third aspect of the present disclosure, in the apparatus for manufacturing a stator according to the first aspect of the present disclosure: the stator core includes an annular yoke and plural teeth provided at an inner periphery face of the yoke, and the slots are provided between adjacent the teeth; and the apparatus for manufacturing a stator further includes a core piece alignment jig that is insertable in a central hole of the stator core, the central hole being formed in the axial direction of the stator core, and that braces the plural core pieces such that the slots of the stator core extend in the axial direction of the stator core.

In the apparatus for manufacturing a stator as described above, the plural core pieces may be aligned such that the slots of the stator core are straight in the axial direction, such that the coils may be inserted into the slots without impediment.

In an apparatus for manufacturing a stator according to a fourth aspect of the present disclosure, in the apparatus for manufacturing a stator according to the third aspect of the present disclosure: the core piece alignment jig includes a cylindrical core piece alignment jig main body and a guide protrusion, the guide protrusion being provided at an outer periphery face of the core piece alignment jig main body and engaging with inner side end portions of the teeth; and the guide protrusion can be accommodated inside the core piece alignment jig main body.

In the apparatus for manufacturing a stator as described above, because the guide protrusion can be accommodated, the guide protrusion is not an obstacle when the skew is being formed in the stator.

In an apparatus for manufacturing a stator according to a fifth aspect of the present disclosure, in the apparatus for manufacturing a stator according to the fourth aspect of the present disclosure: the activation mechanism rotates both of the pair of coil holding jigs holding the coil ends in the circumferential direction of the stator; and the apparatus for manufacturing a stator further includes, at a length direction central portion of the core piece alignment jig main body, a rotation limiting member that, of the plural core pieces, braces a predetermined number of the core pieces disposed at an axial direction central portion of the stator core to be non-rotatable.

In the apparatus for manufacturing a stator as described above, because rotation of the predetermined number of core pieces disposed at the axial direction central portion of the stator core is limited by the rotation limiting member, a substantially "V"-shaped skew as seen in the diametric direction of the stator may be formed simply. In addition, because the rotation limiting member is provided at the core holding jig, aligning the core pieces and limiting rotation of some of the core pieces may be implemented at the same time.

In an apparatus for manufacturing a stator according to a sixth aspect of the present disclosure, in the apparatus for manufacturing a stator according to any one of the first to fifth aspects of the present disclosure, at least one of the pair of coil holding jigs includes: a coil holding jig main body disposed at the axial direction end portion of the stator coil; and plural holding pawls that are provided at the coil holding jig main body to be movable in the diametric direction of the stator core, are inserted into gaps between the coil ends inserted into adjacent the slots, and hold the coil ends.

In the apparatus for manufacturing a stator as described above, because each coil holding jig may hold the coil ends at the individual slots, inconsistency in positions of the coils is unlikely to occur even after the coil holding jig is rotated, and interference between the coil ends may be suppressed.

In an apparatus for manufacturing a stator according to a seventh aspect of the present disclosure, in the apparatus for manufacturing a stator according to any one of the first to fifth aspects of the present disclosure: the stator core includes insulating members disposed between the slots and the coils inserted into the slots, and an insulating member support piece that is provided at at least one end portion of the stator core and supports the insulating members; the insulating member support piece includes an annular base portion, a plurality of support pawls provided at an inner periphery face of the base portion, the support pawls being disposed between the insulating members inserted into adjacent the slots and the support pawls supporting end portions of the insulating members that extend outside the slots, and a support piece holding portion provided at the base portion; and at least one of the pair of coil holding jigs includes an engaging member that engages with the support piece holding portion of the insulating member support piece.

In the apparatus for manufacturing a stator as described above, the coil holding jig may be used to rotate the insulating member support piece that holds the insulating members. Thus, the insulating member holding jig may hold and rotate the coil ends at the individual slots.

A method for manufacturing a stator according to an eighth aspect of the present disclosure includes: a step of forming a stack body in which plural core pieces formed of electrical steel sheets are stacked; a step of inserting coils into slots of the stack body; a step of holding coil ends of the coils inserted into the slots with a coil holding jig, the coil ends projecting from both of axial direction end portions of the stack body; and a step of forming skew in the stack body and the coils, including rotating the coil holding jig.

In the method for manufacturing a stator as described above, the coil holding jig holding the coil ends is rotated, and the core pieces are rotated following the rotation of the coils. Thus, skew may be formed in the stator. Because the core pieces are simply stacked on one another and not fixed to one another or the like, no large frictional forces are generated between the coils and the core pieces. Moreover, because the coils are skewed in the state in which they are held by the coil holding jigs, there is no inconsistency in inclination of the coils and interference between the coil ends may be prevented. Therefore, damage to insulating covers of the coils may be suppressed.

In a method for manufacturing a stator according to a ninth aspect of the present disclosure, the method for manufacturing a stator according to the eighth aspect of the present disclosure further includes a step of bracing, of the plural core pieces, a predetermined number of the core pieces disposed at an axial direction central portion of the stack body to be non-rotatable, including using a rotation limiting member.

In the method for manufacturing a stator as described above, because rotation of the predetermined number of core pieces disposed at the axial direction central portion of the stator core is limited by the rotation limiting member, a substantially "V"-shaped skew as seen in the diametric direction of the stator may be formed simply.

A stator according to a tenth aspect of the present disclosure includes: a stator core in which plural core pieces formed of electrical steel sheets are stacked; and flat wire coils inserted into slots of the stator core, wherein each slot of the stator core is formed substantially in a "V" shape that extends in an axial direction of the stator core at an axial direction central portion of the stator core, regions of the slot that are adjacent to both axial direction ends of the axial direction central portion being slanted to extend in directions intersecting the axial direction, and at least three of the core pieces structure the axial direction central portion.

With the stator as described above, a stator may be provided that uses flat wire coils and in which substantially "V"-shaped skew as seen in the diametric direction is formed. With flat wire coils, higher fill factor, smaller size and higher power than with a round wire coil may be expected. With a substantially "V"-shaped skew, reductions in cogging torque, torque ripple, and magnetic attraction forces acting on a rotor in the axial direction may be expected. In addition, a region in which the slots extend in the axial direction is provided at the axial direction central portion, and the number of core pieces structuring this region is at least three. Thus, a substantially "V"-shaped skew based at this region may be formed.

In a stator according to an eleventh aspect of the present disclosure, the stator according to the tenth aspect of the present disclosure further includes: insulating members disposed between the slots and the flat wire coils inserted in the slots; and an insulating member support piece that is provided at at least one end portion of the stator core and supports the insulating members, the insulating member support piece including an annular base portion, plural support pawls provided at an inner periphery face of the base portion, the support pawls being disposed between the insulating members inserted into adjacent the slots and supporting end portions of the insulating members that extend outside the slots, and a support piece holding portion provided at the base portion.

In the stator as described above, because the support piece holding portion is provided at the insulating member holding piece, the substantially "V"-shaped skew may be formed at the stator by each insulating member support piece being held and rotated.

In a stator according to a twelfth aspect of the present disclosure, in the stator according to the eleventh aspect of the present disclosure, the support piece holding portion includes plural recess portions or protrusions provided at an outer periphery face of the base portion.

In the stator as described above, the support piece holding portion may be formed easily.

### Advantageous Effects of Invention

According to the apparatus for manufacturing a stator, method for manufacturing a stator, and stator according to the present disclosure, an apparatus for manufacturing a stator, a method for manufacturing a stator, and a stator may be provided that enable formation of skew in a stator while suppressing a fall in insulation resistance of coils.

### BRIEF DESCRIPTION OF DRAWINGS

Fig. 1 is a perspective view showing an example of a stator according to a first embodiment of the present disclosure.
Fig. 2 is a sectional diagram of the stator shown in Fig. 1.
Fig. 3A is a sectional diagram cut along line A-A in Fig. 2.
Fig. 3B is a magnified view of arrowed portion C in Fig. 3A.
Fig. 4 is a magnified view of arrowed portion B in Fig. 2.
Fig. 5A is a sectional diagram of principal portions, corresponding to Fig. 3A, which is a sectional diagram of principal portion showing an alternative example of the stator according to the first embodiment of the present disclosure.
Fig. 5B is a magnified view of arrowed portion D in Fig. 5A.
Fig. 6 is a schematic sectional diagram showing an example of an apparatus for manufacturing a stator according to the first embodiment of the present disclosure.
Fig. 7A is a plan view showing an example of a coil holding jig of the apparatus for manufacturing a stator shown in Fig. 6, showing a state in which holding pawls are at non-holding positions.
Fig. 7B is a plan view showing the example of the coil holding jig of the apparatus for manufacturing a stator shown in Fig. 6, showing a state in which the holding pawls are at holding positions.
Fig. 8 is a sectional diagram cut along line E-E in Fig. 6.
Fig. 9 is an elevation view showing an example of a core piece alignment jig of the apparatus for manufacturing a stator shown in Fig. 6.
Fig. 10A is a sectional diagram cut along line F-F in Fig. 6.
Fig. 10B is a magnified view of arrowed portion H in Fig. 10A.
Fig. 11A is a sectional diagram cut along line G-G in Fig. 6.
Fig. 11B is a magnified view of arrowed portion J in Fig. 11A.
Fig. 12 is a flowchart showing an example of a method for manufacturing a stator according to the first embodiment of the present disclosure.
Fig. 13 is a plan view showing an alternative example of the coil holding jig shown in Fig. 7.
Fig. 14 is a schematic sectional diagram showing an example of an apparatus for manufacturing a stator according to a second embodiment of the present disclosure.
Fig. 15 is a perspective view showing an example of a stator manufactured using the apparatus for manufacturing a stator shown in Fig. 14.
Fig. 16 is a sectional diagram of the stator shown in Fig. 15.

### DESCRIPTION OF EMBODIMENTS

The present application is based on Japanese Patent Application No. 2022-027045, filed on February 24, 2022, the contents of which form a part of the contents of this application.

The present disclosure will become more fully understood from the detailed description given hereinbelow. Further range of application of the present disclosure will become clearer from the detailed description given hereinbelow. However, the detailed description and the specific embodiment are illustrated of desired embodiments of the present disclosure and are described only for the purpose of explanation. Various changes and modifications will be apparent to those ordinary skilled in the art on the basis of the detailed description.

The applicant has no intention to give to public any disclosed embodiment. Among the disclosed changes and modifications, those which may not literally fall within the scope of the patent claims constitute, therefore, a part of the present invention in the sense of doctrine of equivalents.

Below, exemplary embodiments for carrying out the present disclosure are described with reference to the drawings. A scope required for explanation to achieve the object of the present disclosure is illustrated in a schematic manner. Scopes required for explanation of the relevant parts of the present disclosure are principally explained, and parts for which explanations are omitted will be based on publicly known technology. The same or similar reference symbols are used for members that are the same or equivalent in the drawings, and duplicative descriptions are omitted.

### < First Embodiment >

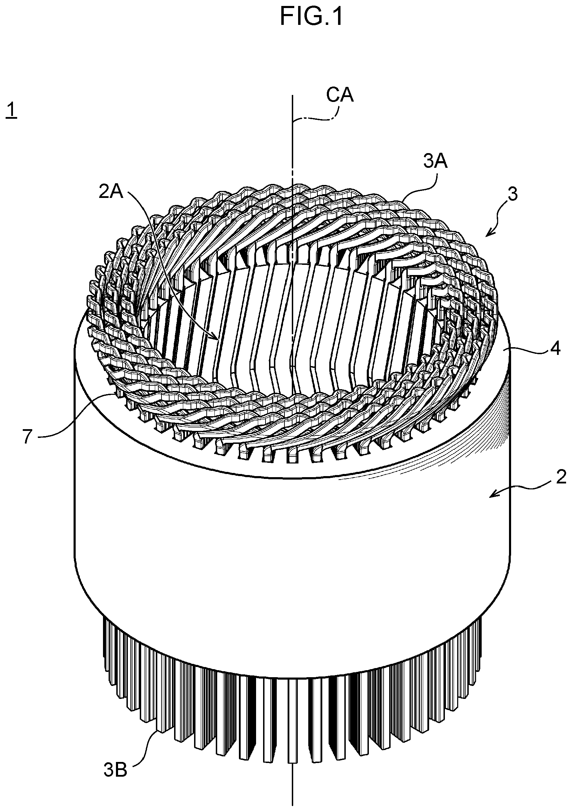

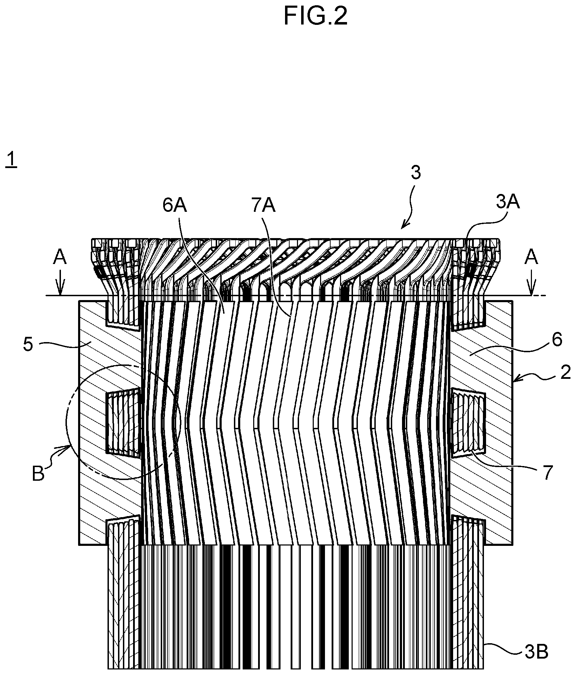

First, structure of a stator according to a first embodiment of the present disclosure is described. Fig. 1 is a perspective view showing an example of the stator according to the first embodiment of the present disclosure. Fig. 2 is a sectional diagram in which the stator shown in Fig. 1 is cut along a length direction thereof. As shown in Fig. 1 and Fig. 2, a stator 1 according to the present embodiment includes at least a stator core 2 and flat wire coils 3 that are inserted into slots 7 in the stator core 2. The stator 1 according to the present embodiment illustrates an example of a stator that structures a portion of a rotor of an inner rotor-type rotating electrical machine. However, the stator 1 may structure a portion of an alternative structure such as, for example, an outer rotor-type rotating electrical machine. A rotating electrical machine including the stator 1 is not particularly limited but may be, for example, a single-phase induction motor.

The stator core 2 may be formed of a conductor in an annular shape, more specifically a substantially circular tube shape in which a central hole 2A is formed in a central portion of the stator core 2. The stator core 2 may be formed by stacking a plural number (for example, in the order of tens to hundreds) of magnetic bodies, specifically core pieces 4 formed of electrical steel sheets, along a central axis CA of the stator core 2. Below, the direction along the central axis CA may be referred to simply as "the axial direction". In Fig. 1 and Fig. 2, to facilitate viewing of the drawings, boundaries between the core pieces 4 structuring the stator core 2 are not depicted.

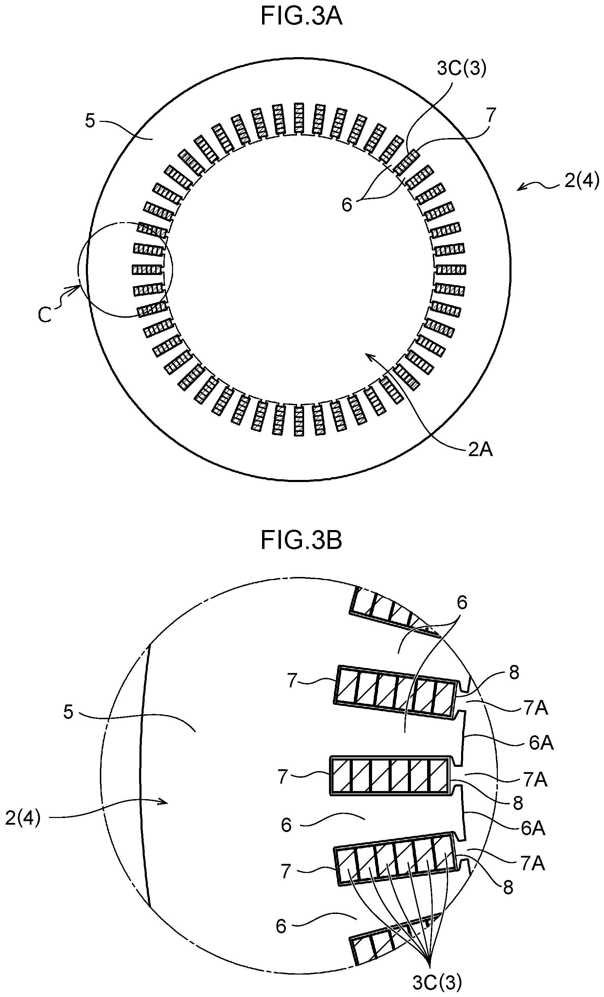

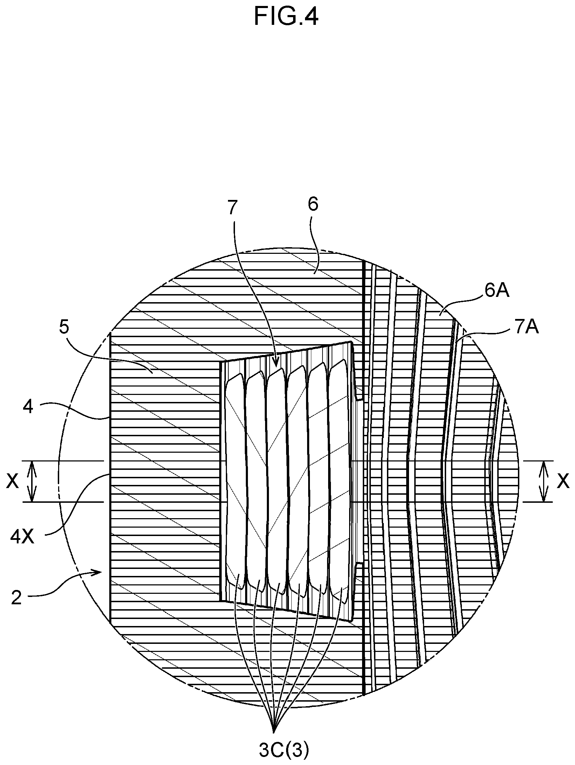

Fig. 3A and Fig. 3B are sectional diagrams of principal portions of the stator according to the present embodiment. Fig. 3A is a sectional diagram cut along line A-A in Fig. 2, and Fig. 3B is a magnified view of arrowed portion C in Fig. 3A. Fig. 4 is a magnified view of arrowed portion B in Fig. 2. As shown in Fig. 3A to Fig. 4, the core pieces 4 may be formed as relatively thin plate-shaped bodies of, for example, around 0.2 to 0.5 mm. The core pieces 4 may be fabricated by a widely known shaping method, for example, using a punch and die to punch out a certain shape from a strip-shaped electrical steel sheet serving as a raw material.

The core pieces 4 and the stator core 2 in which the core pieces 4 are stacked may include an annular yoke 5 and plural teeth 6 provided at an inner periphery face of the yoke 5. The plural teeth 6 are formed so as to extend in the axial direction from the inner periphery face of the yoke 5 and be spaced apart by a predetermined spacing. Spaces that are demarcated by adjacent teeth 6 and the inner periphery face of the yoke 5 may function as the slots 7 in which the flat wire coils 3 are inserted. In particular, as shown in Fig. 3B, narrow gaps 7A may be formed between inner side end portions 6A of the adjacent teeth 6, which are closer to the central axis CA. In the present embodiment, an example is illustrated in which no protrusions, recess portions or the like are provided at an outer periphery face of the yoke 5. However, the present disclosure is not limited thus. For example, ear portions for securing the stator 1 at a casing of the rotating electrical machine, which is not shown in the drawings, recess portions or protrusions to be used when adhering the core pieces 4 to one another, and the like may be provided at the outer periphery face of the yoke 5.

The flat wire coils 3 may be structured by plural segment coils that are each formed by bending a flat conductor with a substantially rectangular shape in cross section into a predetermined shape. Surfaces of the flat wire coils 3 may be covered with an insulating layer of enamel or the like. The present embodiment illustrates an example in which hairpin coils are employed as the flat wire coils 3.

When each flat wire coil 3 is being inserted into the slot 7 of the stator core 2 as depicted in Fig. 1, the flat wire coil 3 is inserted in the axial direction such that both of end portions of the flat wire coil 3 project from end portions of the stator core 2. Below, of the two end portions of the flat wire coil 3 projecting from the end portions of the stator core 2, one end portion includes an inflected portion that has been machined to be bent into a substantial "U" shape and is referred to as a first coil end 3A. The end portion that does not include the inflected portion, but is subsequently subjected to twisting and welding or the like, is referred to as a second coil end 3B. The portion of the flat wire coil 3 that is inserted in the slot 7 is referred to as a slot insertion portion 3C. Dimensions of the flat wire coils 3, a number of the slots 7, and a number of the flat wire coils 3 that may be inserted in one of the slots 7 are not limited by the dimensions and numbers illustrated in Fig. 1; numerous modifications are possible.

The stator 1 according to the present embodiment may include insulation paper 8 between the stator core 2 and the flat wire coils 3, specifically between each slot 7 of the stator core 2 and the slot insertion portions 3C of the flat wire coils 3. The insulation papers 8 serve as an example of insulating members that insulate the stator core 2 from the flat wire coils 3. For specific materials and shapes of the insulation papers 8, widely known materials and shapes may be employed. An alternative insulating member such as an insulator, varnish or the like may be employed instead of the insulation paper 8.

In the stator 1 provided with the structures described above, skew is formed in order to reduce cogging torque, torque ripple and the like. More specifically, particularly as shown in Fig. 2 and Fig. 4, each slot 7 of the stator core 2 employs a shape in which an axial direction central portion X of the stator core 2 extends in the axial direction, and regions of the slot 7 that are adjacent to both axial direction ends of the axial direction central portion X are slanted to extend in directions intersecting the axial direction. Thus, as viewed in the diametric direction, the slot 7 is formed substantially in a "V" shape, a base portion of which is the axial direction central portion X. To describe this more specifically, a region adjacent to one end in the axial direction of the axial direction central portion X (for example, an end portion of the axial direction central portion X at the upper side in Fig. 2) may extend so as to be slanted in one direction (for example, to the left side in Fig. 2) toward one axial direction end portion of the stator core 2 (for example, toward the upper side in Fig. 2), and a region adjacent to the axial direction other end of the axial direction central portion X (for example, an end portion at the lower side in Fig. 2) may extend so as to be slanted in the same one direction as the region described above toward the axial direction other end portion of the stator core 2 (in the example, toward the lower side in Fig. 2).

Thus, because the slots 7 of the stator core 2 are formed with skew so as to extend substantially in the "V" shapes as seen in the diametric directions, cogging torque, torque ripple and the like may be reduced. The fact that each slot 7 of the stator 1 according to the present embodiment extends in the axial direction at the axial direction central portion X is particularly noteworthy. Because the slot 7 is provided with a region extending in the axial direction at the axial direction central portion X, when the stator 1 is manufactured using, for example, a stator manufacturing apparatus 20 and manufacturing method according to the present embodiment, which are described below, the skew may be formed by reference to the axial direction central portion X. As a result, ease of operations when manufacturing the stator may be improved. A specific method of forming the skew is described below.

A number of the core pieces 4 structuring the axial direction central portion X (below, these core pieces are referred to as central portion core pieces 4X to distinguish them from the other core pieces 4) is set to at least three. This is because, as mentioned above, the electrical steel sheets forming the core pieces 4 are relatively thin. Therefore, if the number of the central portion core pieces 4X is small, specifically two or less, the central portion core pieces 4X may be locally deformed when skew is being formed in the stator 1. The number of the central portion core pieces 4X may be altered to an arbitrary number provided the number is at least three. Specifically, when the total number of core pieces 4 forming the stator core 2 is large (for example, several hundred), the core pieces 4 are comparatively thin (for example, around 0.2 mm), and the number of the central portion core pieces 4X may be increased proportionally. Fig. 4 illustrates an example in which the number of the central portion core pieces 4X is five. When the number of the central portion core pieces 4X is set to five or more, the above-mentioned deformation of the central portion core pieces 4X may be more assuredly suppressed.

On the other hand, if the above-mentioned number of the central portion core pieces 4X is too large, regions in which the skew is formed are smaller and cogging torque, torque ripple and the like may not be reduced sufficiently. Accordingly, the number of the central portion core pieces 4X may be adjusted to be no more than 0.5% of the total number of the core pieces 4 forming the whole stator core 2.

According to the structure described above, the stator 1 according to the present embodiment reduces cogging torque, torque ripple and the like and suppresses damage to insulating layers of the flat wire coils 3. Moreover, because the slots 7 extend in the axial direction at the axial direction central portion X, the stator 1 in which the "V"-shaped skew is formed may be manufactured with good ease of operations.

When, for example, the flat wire coils 3 inserted in the slots 7 displace or the like, the insulation papers 8 of the stator 1 according to the present embodiment may crumple in the slots 7 and may be folded up. Accordingly, in addition to the structures described above, the stator 1 according to the present embodiment may include an insulating member support piece 10 for preventing the above-mentioned crumpling and the like of the insulation papers 8.

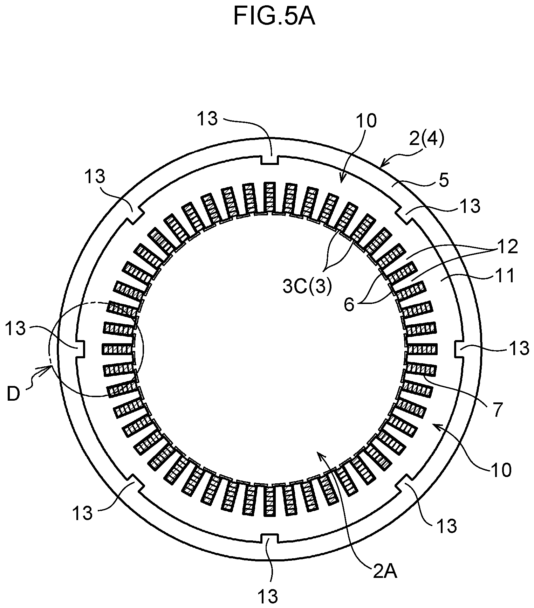

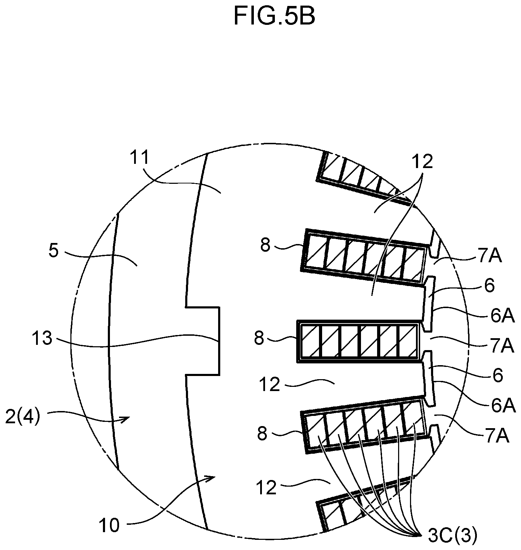

Fig. 5A and Fig. 5B show an alternative example of the stator according to the first embodiment of the present disclosure. Fig. 5A is a sectional diagram of principal portions corresponding to Fig. 3A, and Fig. 5B is a magnified view of arrowed portion D in Fig. 5A. The insulating member support piece 10 may be structured by a plate-shaped member provided at one end portion of the stator core 2. The insulating member support piece 10 may include at least an annular base portion 11 and a plural number of support hooks 12. The support hooks 12 are provided at an inner periphery face of the annular base portion 11, are disposed between the insulation papers 8 inserted in adjacent slots 7, and support end portions of the insulation papers 8 that extend outside the slots 7. Fig. 5A and Fig. 5B illustrate an example in which the insulating member support piece 10 is disposed at an end face at the side of the stator core 2 from which the first coil ends 3A project. However, the insulating member support piece 10 may be disposed at one or both of the two end portions of the stator core 2.

The base portion 11 of the insulating member support piece 10 may be stacked and disposed at an end portion of the yoke 5 of the stator core 2. As shown in Fig. 5B, exterior shapes of the support hooks 12 of the insulating member support piece 10 may be formed to fit to the teeth 6 of the stator core 2 and disposed so as to match the positions of the teeth 6. That is, the support hooks 12 may be disposed so as to sandwich the first coil ends 3A extending from the slots 7 in the circumferential direction. When the support hooks 12 are disposed in this manner, end portions of the insulation papers 8 extending outside the slots 7 are enclosed by inner periphery faces of the support hooks 12 and the base portion 11. Consequently, crumpling of end portions of the insulation papers 8 may be suppressed even when the flat wire coils 3 are displaced or the like.

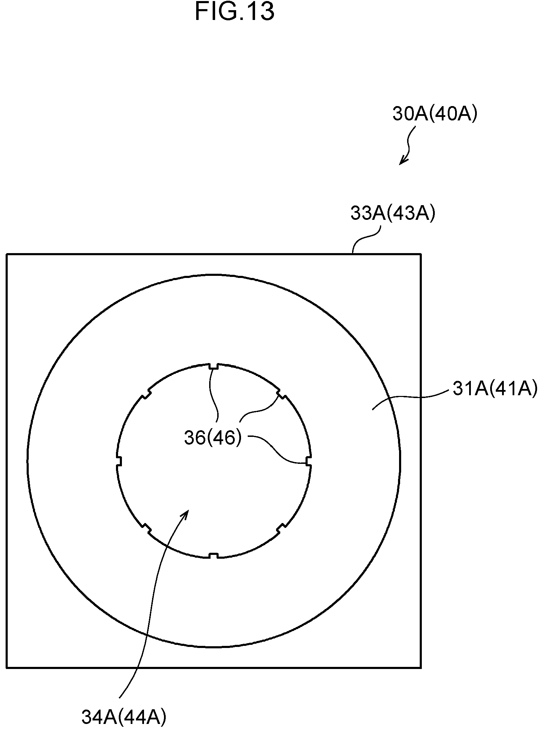

It is preferable if support piece holding portions 13 are provided at the base portion 11 of the insulating member support piece 10, specifically at an outer peripheral edge of the base portion 11. The support piece holding portions 13 may be provided to enable holding of the insulating member support piece 10 by an arbitrary jig. The arbitrary jig referred to here may be, for example, the third and fourth coil holding jigs 30A and 40A as illustrated in Fig. 13. In the present embodiment, as shown in Fig. 5A and Fig. 5B, an example is illustrated in which plural recess portions spaced apart by a predetermined angular interval are provided in the outer periphery face of the base portion 11 to serve as the support piece holding portions 13. However, this is not limiting provided the support piece holding portions 13 may be held by a jig. More precisely, for example, protrusions may be provided instead of the recess portions, and protrusions, recess portions or the like may be provided at a face at the opposite side of the base portion 11 from the side thereof that opposes the yoke 5 of the stator core 2.

Because the support hooks 12 are provided between the first coil ends 3A, the insulating member support piece 10 is formed such that the first coil ends 3A are rotated when the support piece holding portions 13 of the insulating member support piece 10 are held by the arbitrary jig and rotated. Therefore, skew may be formed in the stator 1 simply, without provision of a jig with holding pawls that match the positions of the first and second coil ends 3A and 3B.

### Apparatus for manufacturing a stator

Now, the stator manufacturing apparatus 20 according to the present embodiment is described. The stator manufacturing apparatus 20 illustrated below may be used when manufacturing a stator similar to the stator 1 according to the present embodiment, which is described above. Accordingly, an example of the stator manufacturing apparatus 20 according to the present embodiment for manufacturing the stator 1 described above is described below. However, the stator manufacturing apparatus 20 according to the present embodiment may manufacture a stator other than the stator 1 described above. More specifically, the stator manufacturing apparatus 20 may manufacture a stator that includes, for example, alternative coils such as round wire coils or the like rather than the flat wire coils 3.

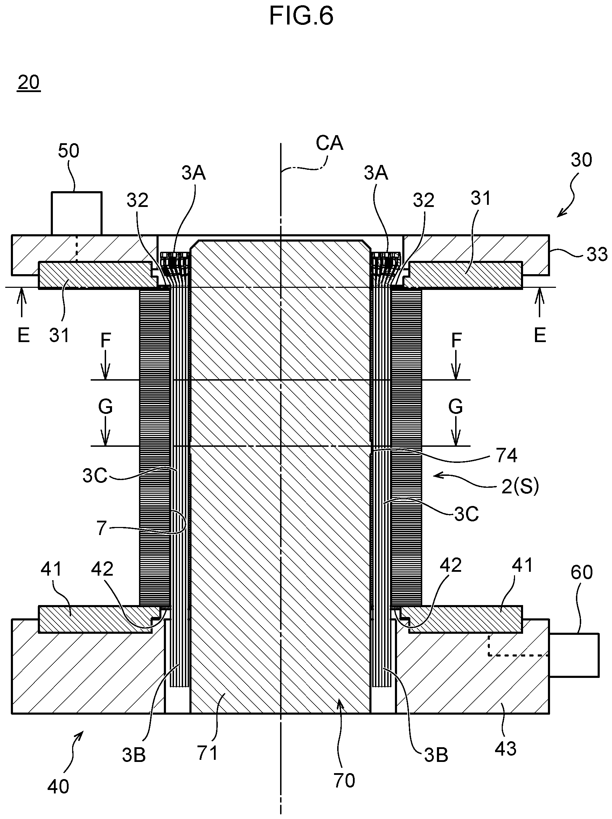

Fig. 6 is a schematic sectional diagram showing an example of the apparatus for manufacturing a stator according to the first embodiment of the present disclosure. As shown in Fig. 6, the stator manufacturing apparatus 20 according to the present embodiment is capable of manufacturing the stator 1 including the stator core 2 in which the plural core pieces 4 are stacked and the flat wire coils 3 inserted into the slots 7 of the stator core 2. The stator manufacturing apparatus 20 includes at least first and second coil holding jigs 30 and 40 and first and second activation mechanisms 50 and 60. The first and second coil holding jigs 30 and 40 are capable of holding the first and second coil ends 3A and 3B of the flat wire coils 3 disposed in the slots 7. The first and second activation mechanisms 50 and 60 rotate the first and second coil holding jigs 30 and 40.

The first and second coil holding jigs 30 and 40 are jigs that are disposed at, respectively, the two axial direction end portions of the stator core 2 and that hold the first and second coil ends 3A and 3B projecting from the two end portions. The first and second coil holding jigs 30 and 40 may have matching structures, apart from their dispositions and holding targets. Accordingly, in the following descriptions of the first and second coil holding jigs 30 and 40, structures of the first coil holding jig 30 are described, corresponding reference symbols and the like of the second coil holding jig 40 are indicated in parentheses, and specific descriptions are in line with descriptions of the first coil holding jig 30.

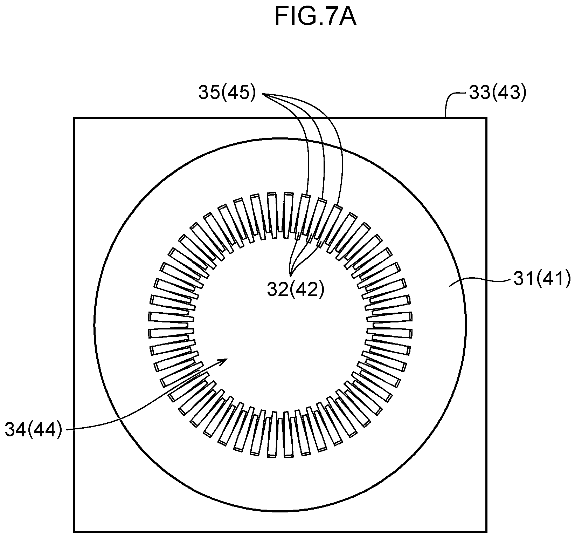

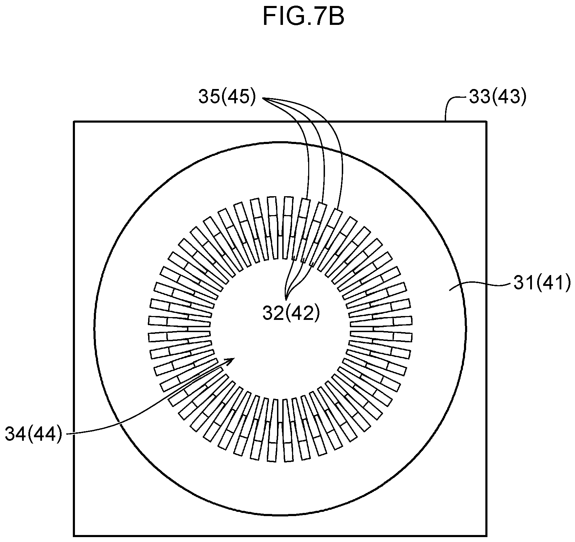

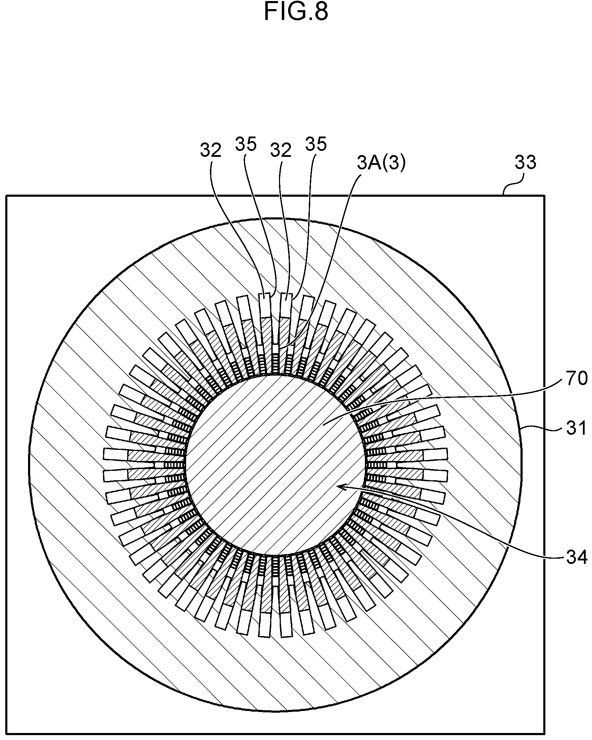

Fig. 7A and Fig. 7B are plan views showing an example of a coil holding jig of the apparatus for manufacturing a stator shown in Fig. 6. Fig. 7A shows a state in which holding pawls are at non-holding positions, and Fig. 7B shows a state in which the holding pawls are at holding positions. Fig. 8 is a sectional diagram cut along line E-E in Fig. 6. As shown in Fig. 6 to Fig. 8, the first coil holding jig 30 includes at least a first coil holding jig main body 31 (a second coil holding jig main body 41) and a plural number of first holding pawls 32 (second holding pawls 42). The first holding pawls 32 are provided at the first coil holding jig main body 31 to be movable in the diametric direction of the stator core 2, and are capable of being inserted into gaps between the first coil ends 3A that are inserted into adjacent slots 7 and of holding the first coil ends 3A.

The first coil holding jig main body 31 may be structured by a member with a substantially annular shape. The first coil holding jig main body 31 is attached to a first base 33 (a second base 43) to be rotatable in the circumferential direction. A first penetrating hole 34 (a second penetrating hole 44) is provided at a central portion of the first coil holding jig main body 31. Plural first accommodation slits 35 (second accommodations slits 45) that are capable of accommodating, respectively, the first holding pawls 32 may be provided at an inner wall of the first penetrating hole 34.

At least portions of the first holding pawls 32 are accommodated in the first accommodation slits 35. The first holding pawls 32 may be structured as members that are movable in the diametric direction by deployment of a moving apparatus, which is not shown in the drawings. The first holding pawls 32 may be made movable between the non-holding positions, at which large portions of the first holding pawls 32 excluding distal end portions thereof are accommodated in the first accommodation slits 35, as shown in Fig. 7A, and holding positions at which large portions of the first holding pawls 32 including the distal end portions project into the first penetrating hole 44. When the first holding pawls 32 are moved to the holding positions, as shown in Fig. 8, the first holding pawls 32 are disposed so as to hold the first coil ends 3A projecting from the stator core 2 in the circumferential direction.

The first and second activation mechanisms 50 and 60 are, for example, fixed to, respectively, the first and second bases 33 and 43 and may be capable of rotating the first and second coil holding jig main bodies 31 and 41 relative to the first and second bases 33 and 43. For example, widely known rotating mechanisms that operate using motors or the like may be employed as the first and second activation mechanisms 50 and 60.

As shown in Fig. 6, the stator manufacturing apparatus 20 according to the present argument may include, in addition to the structures described above, a core piece alignment jig 70 for aligning the plural core pieces 4 that form the stator core 2.

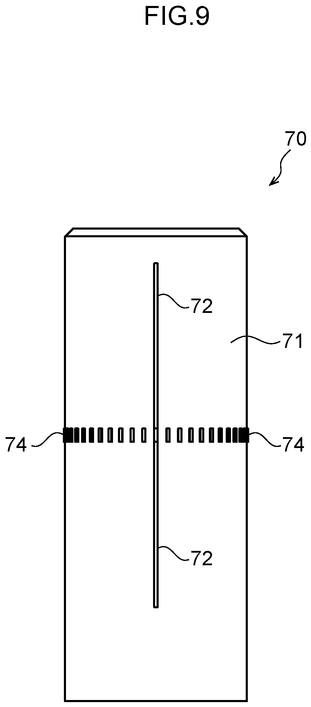

Fig. 9 is an elevation view showing an example of a core piece alignment jig of the apparatus for manufacturing a stator shown in Fig. 6. As is mainly shown in Fig. 9, the core piece alignment jig 70 may include a core piece alignment jig main body 71 and a guide protrusion 72. The core piece alignment jig main body 71 has a column shape, specifically, a substantially circular column shape with an outer diameter matching a diameter of the central hole 2A of the stator core 2. The guide protrusion 72 is provided at an outer periphery face of the core piece alignment jig main body 71 and is engageable with the inner side end portions 6A of the teeth 6 of the stator core 2.

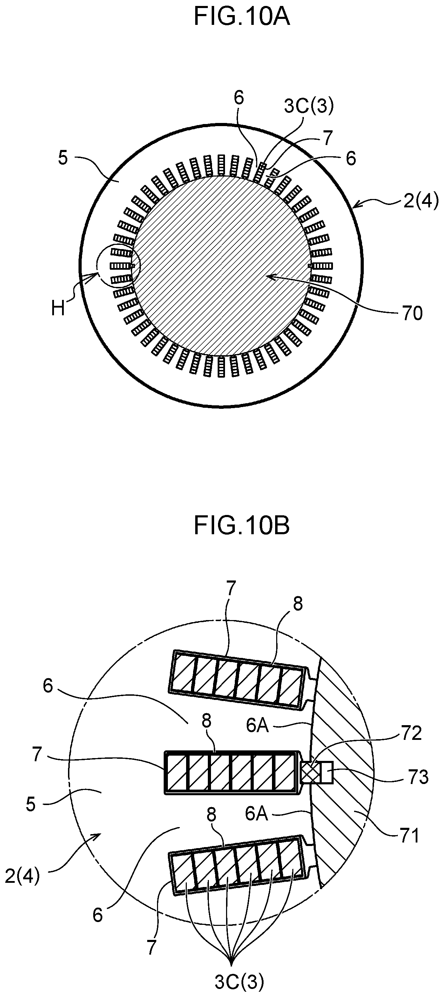

Fig. 10A and Fig. 10B are sectional diagrams of principal portions of a stack body shown in Fig. 6. Fig. 10A is a sectional diagram cut along line F-F in Fig. 6, and Fig. 10B is a magnified view of arrowed portion H in Fig. 10A. As shown in Fig. 9 to Fig. 10B, the guide protrusion 72 may be structured by a long, narrow block member extending in the axial direction, and may be disposed at one or plural locations of the outer periphery face of the core piece alignment jig main body 71, for example, at two locations. An accommodation recess portion 73 that is capable of accommodating the guide protrusion 72 is provided at a position of the core piece alignment jig main body 71 corresponding with a diametric direction base portion of each guide protrusion 72. Because the accommodation recess portion 73 is provided, the guide protrusion 72 may be accommodated in the accommodation recess portion 73, temporarily removing bracing of the core pieces 4, for example, when the skew is being formed at the stator 1 and the like. Operation of the guide protrusion 72 may be controlled using an actuator that is not shown in the drawings, or a resilient body may be provided in the accommodation recess portion 73 and the guide protrusion 72 may be accommodated in the accommodation recess portion 73 automatically when the guide protrusion 72 is pressed by the teeth 6 or the like.

The core piece alignment jig 70 provided with the structure described above may be inserted into the central hole 2A of the stator core 2 that is formed of the plural core pieces 4 that have been stacked beforehand, or the plural core pieces 4 forming the stator core 2 may be successively fitted round the core piece alignment jig 70 from one end portion side thereof. Thus, the stack body formed of the plural core pieces 4 is aligned and braced in a state in which the slots 7 extend in the axial direction.

The stator manufacturing apparatus 20 according to the present embodiment may include, in addition to the structures described above, rotation limiting members 74 that brace, of the plural stacked core pieces 4, a predetermined number (for example, three or more) of the core pieces 4 that are disposed at the axial direction central portion X of the stator core 2 (in other words, the central portion core pieces 4X) to be non-rotatable. It is sufficient that the rotation limiting members 74A are structures capable of bracing the central portion core pieces 4X to be non-rotatable; the rotation limiting members 74 are not particularly limited to a specific bracing structure. Therefore, the rotation limiting members 74 may be, for example, structures that brace outer periphery faces of the central portion core pieces 4X. As shown in Fig. 8, the present embodiment illustrates an example in which the rotation limiting members 74 are disposed at the outer periphery face of the core piece alignment jig 70.

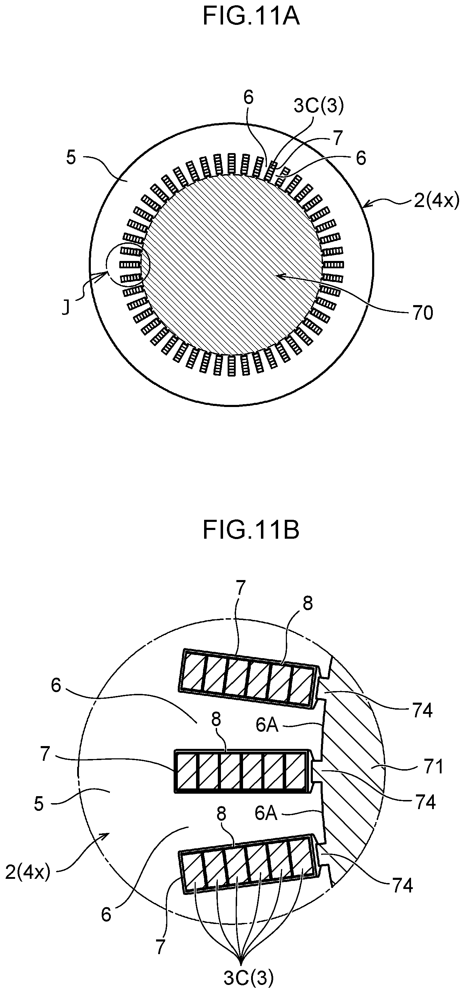

Fig. 11A and Fig. 11B are sectional diagrams of principal portions of the stack body shown in Fig. 6. Fig. 11A is a sectional diagram cut along line G-G in Fig. 6, and Fig. 11B is a magnified view of arrowed portion J in Fig. 11A. As shown in Fig. 9, Fig. 11A and Fig. 11B, the rotation limiting members 74 may be structured by plural protrusions provided in radial shapes, which are spaced by pre-determined intervals in the circumferential direction, at a length direction (that is, the axial direction) central portion of the outer periphery face of the core piece alignment jig main body 71. Circumferential direction widths of the rotation limiting members 74 are adjusted to widths the same as or a little narrower than the gaps 7A formed between the teeth 6 of the stator core 2. The rotation limiting members 74 may be disposed at positions that mesh with the gaps 7A in the state in which the core piece alignment jig main body 71 is inserted into the central hole 2A of the stator core 2. Axial direction lengths of the rotation limiting members 74 may be set to lengths capable of bracing the teeth 6 at least at three or more of the core pieces 4, for example, 0.9 mm or more. The present embodiment illustrates an example in which the projections serving as the rotation limiting members 74 are provided so as to mesh with all of the plural gaps 7A arrayed in the circumferential direction of the stator core 2, but the rotation limiting members 74 may be provided so as to mesh with only some of the gaps 7A. The rotation limiting members 74 may be made movable in the diametric direction by employment of, for example, a similar structure to the guide protrusion 72 described above, so as not to interfere with operation of the core piece alignment jig main body 71, in which case diametric direction movement of the rotation limiting members 74 may be conducted independently from the guide protrusion 72.

When the core piece alignment jig main body 71 is inserted into the central hole 2A of the stator core 2, the rotation limiting members 74 provided with the structures described above may be disposed in the gaps 7A of the central portion core pieces 4X and non-rotatably brace the core pieces 4 as shown in Fig. 11A and Fig. 11B. Hence, the substantially "V"-shaped skew whose base portion is the region of the slots 7 at which the central portion core pieces 4X braced by the rotation limiting members 74 are formed may be easily formed in the slots 7 of the stator core 2 simply by the first and second coil holding jigs 30 and 40 being rotated in the same direction (for example, a counterclockwise direction). The present embodiment illustrates an example in which the guide protrusion 72 and rotation limiting members 74 are included at the core piece alignment jig 70. Instead, however, the rotation limiting members 74 alone may be provided at the core piece alignment jig main body 71.

### Method for manufacturing a stator

Now, the method for manufacturing a stator according to the first embodiment of the present disclosure is described. In the present embodiment, the stator manufacturing apparatus 20 described above is employed as an apparatus that implements this method for manufacturing a stator. A stator manufacturing method is described in which substantially "V"-shaped skew as seen in the diametric direction is formed, as in the stator 1 described above. However, it should be clearly understood that the manufacturing method of the present disclosure is not limited to being implemented by the stator manufacturing apparatus 20 described above and that a stator with a structure different from the stator 1 described above may be manufactured. The descriptions of effects and the like given below also serve as descriptions of effects of the stator manufacturing apparatus 20 and stator 1 according to the present embodiment.

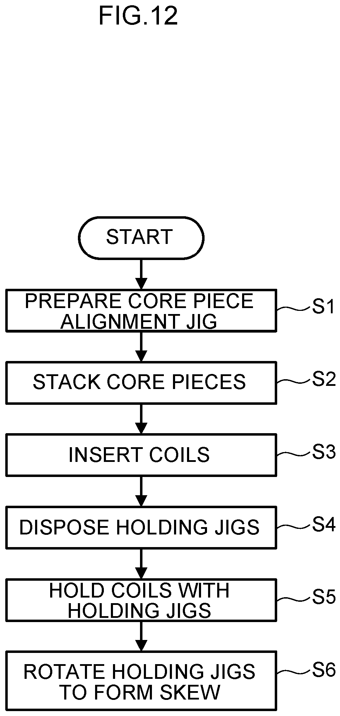

Fig. 12 is a flowchart showing an example of the method for manufacturing a stator according to the first embodiment of the present disclosure. In the method for manufacturing a stator according to the present embodiment, first, the core piece alignment jig 70 including the guide protrusion 72 and the rotation limiting members 74 as shown in Fig. 8 is prepared (step S1).

Then, the core pieces 4 are stacked by being successively supplied to one end of the core piece alignment jig 70 (step S2). The core pieces 4 supplied to the one end of the core piece alignment jig 70 are fitted on in a predetermined orientation and hence stacked in a state in which the gaps 7A of the core pieces 4 mesh with the guide protrusion 72 and their positions in the circumferential direction are fixed. As a result, in a stack body S structured by the plural core pieces 4 (equivalent to the stator core 2 before skew is formed), the slots 7 extend straight in the axial direction. It is particularly noteworthy that the core pieces 4 do not have structures for fixing the adjacent core pieces 4 to one another, for example, crimp portions or the like, but are simply stacked in the stack body S. Thus, step S7 described below is conducted in a state in which the core pieces 4 are not fixed to one another. Therefore, a rotation of the core pieces 4 that is described below can be implemented without impediment.

As the supply of the core pieces 4 to the core piece alignment jig 70 progresses and the core pieces structuring the axial direction central portion X of the stator core 2 (that is, the central portion core pieces 4X) are supplied, each central portion core piece 4X moves to a position at which the gaps 7A formed between the teeth 6 mesh with the rotation limiting members 74, and is then stacked on another, adjacent core piece 4 and stops. Therefore, the central portion core pieces 4X are non-rotatably braced by the rotation limiting members 74.

After the desired number of the core pieces 4 have been supplied to the core piece alignment jig 70 and the stack body S of the core pieces 4 has been formed, the flat wire coils 3 are inserted into the slots 7 extending in the axial direction of the stack body S (step S3). At this time, the flat wire coils 3 inserted into the slots 7 extend straight in the same manner as the slots 7, apart from the end portions being machined to be bent into substantial "U" shapes. Therefore, large friction forces do not occur when the flat wire coils 3 are being inserted into the slots 7.

After the flat wire coils 3 have been inserted into the slots 7 of the stack body S, the first and second coil holding jigs 30 and 40 are disposed at the two end portions of the stack body S (step S4). The second coil holding jig 40 may have been disposed in advance at the other end portion of the core piece alignment jig 70 when the core piece alignment jig 70 was prepared.

When the first and second coil holding jigs 30 and 40 have been disposed at the two end portions of the stack body S, the first and second holding pawls 32 and 42 are operated and move from the non-holding positions shown in Fig. 7A to the holding positions shown in Fig. 7B. Thus, the first and second coil ends 3A and 3B are held by the first and second holding pawls 32 and 42 (step S5).

Then, the first and second activation mechanisms 50 and 60 are operated and rotate the first and second coil holding jig main bodies 31 and 41 in the same direction, for example, the counterclockwise direction. A rotation angle (skew angle) at this time may be adjusted to suit the size and so forth of the stator being fabricated, and in the case of, for example, a two-pole motor, may be 5° to 30°. By the rotation of the first and second coil holding jig main bodies 31 and 41 mentioned above, the flat wire coils 3 are deformed into the substantial "V" shapes as seen in the diametric direction with bases in the braced region of the slots 7 at the central portion core pieces 4X that are braced by the rotation limiting members 74 to be non-rotatable. Accompanying the deformation of the flat wire coils 3, the core pieces 4 excluding the central portion core pieces 4X also rotate, forming the skew in the stack body S and the flat wire coils 3 (step S6). For this rotation of the core pieces 4 to proceed smoothly, the guide protrusion 72 may be accommodated in the accommodation recess portion 73 in advance.

As described above, according to the stator manufacturing apparatus 20 and stator manufacturing method according to the present embodiment, the first and second coil holding jigs 30 and 40 are used to form skew in the stator by holding and rotating the first and second coil ends 3A and 3B. Therefore, in the stator manufacturing apparatus 20 and stator manufacturing method according to the present embodiment, frictional forces that are generated between the flat wire coils 3 and the core pieces 4 may be reduced compared to insertion of linear coils into a stator core in which skew has been formed. Furthermore, because the first and second holding pawls 32 and 42 are disposed between neighboring slots 7, the first and second coil ends 3A and 3B are held at the individual insertion slots 7 by the first and second holding pawls 32 and 42 and rotated. Therefore, inconsistency in spacings between the first or second coil ends 3A or 3B is less likely to occur, and the skew may be formed without causing interference between the first or second coil ends 3A or 3B that are inserted at neighboring slots 7. In addition, damage to insulating layers of the flat wire coils 3 may be suppressed.

The substantially "V"-shaped skew as seen in the diametric direction may be formed simply by employing the structure in which the rotation limiting members 74 are used to brace only core pieces at arbitrary positions, that is, the central portion core pieces 4X, to be non-rotatable. In the stator manufacturing method described above, because the rotation limiting members 74 provided at the core piece alignment jig 70 that includes the guide protrusion 72 are used, when the core pieces are being stacked in step S2, the central portion core pieces 4X are braced to be non-rotatable at the same time. However, the stacking of core pieces and bracing of the central portion core pieces 4X may be implemented at separate timings. In this case, if a step of bracing the central portion core pieces 4X to be non-rotatable is delayed, this step should be conducted before the step of forming skew illustrated by step S6.

Because the core piece alignment jig 70 including the guide protrusion 72 is used for stacking the core pieces 4, the stack body S in which the slots 7 extend straight in the axial direction of the stator core 2 may be formed easily without the core pieces 4 being fixed to one another.

The first and second coil holding jigs 30 and 40 described above use the first and second holding pawls 32 and 42 to hold the first and second coil ends 3A and 3B, but a coil holding jig of the present disclosure is not limited to the structure described above. For example, when the insulating member support piece 10 as illustrated in Fig. 5A and Fig. 5B is employed at a stator being fabricated, coil holding jigs with structures different from the first and second coil holding jigs 30 and 40 described above may be employed. Accordingly, as a variant example of the embodiment described above, a structure is briefly described below in which the third and fourth coil holding jigs 30A and 40A, which are different from the first and second coil holding jigs 30 and 40 described above, are used as structures that hold the first and second coil ends 3A and 3B. Similarly to the first and second coil holding jigs 30 and 40, the third and fourth coil holding jigs 30A and 40A illustrated below have the same structure except for dispositions and holding targets. Accordingly, of the third and fourth coil holding jigs 30A and 40A, structures of the third coil holding jig 30A are described below, corresponding reference symbols and the like of the fourth coil holding jig 40A are indicated in parentheses, and specific descriptions are in line with descriptions of the third coil holding jig 30A.

Fig. 13 is a plan view showing an alternative example of the coil holding jig shown in Fig. 7. As shown in Fig. 13, the third coil holding jig 30A may include a third coil holding jig main body 31A (a fourth coil holding jig main body 41A) that is attached to a third base 33A (a fourth base 43A) to be rotatable in the circumferential direction. The third coil holding jig main body 31A may be structured by a member with a substantially annular shape. A third penetrating hole 34A (a fourth penetrating hole 44A) is provided at a central portion of the third coil holding jig main body 31A, and fitting protrusions 36 (fitting protrusions 46) may be provided at an inner wall of the third penetrating hole 34A. The fitting protrusions 36 fit to the support piece holding portions 13 of the insulating member support piece 10 and rotate the insulating member support piece 10 together with the third coil holding jig main body 31A. The fitting protrusions 36 and 46 are equivalent to engaging members that engage with a support piece holding portion.

Because the third and fourth coil holding jigs 30A and 40A are provided with the structures described above, the flat wire coils 3 may be rotated by a relatively simple structure. If shapes of the support piece holding portions 13 of the insulating member support piece 10 are standardized, coil holding jigs that are used for stator cores 2 with, for example, different numbers of slots may be standardized. The first and second coil holding jigs 30 and 40 described above and the third and fourth coil holding jigs 30A and 40A may be used in combination to suit the structure of a stator.

When the third and fourth coil holding jigs 30A and 40A are used to manufacture a stator, the support hooks 12 of the insulating member support piece 10 are disposed between the first coil ends 3A when the flat wire coils 3 are being inserted into the slots 7 in the aforementioned step S2. Therefore, the aforementioned step S5 is unnecessary. Thus, the stator may be manufactured in even fewer steps. Furthermore, when the third and fourth coil holding jigs 30A and 40A are used to manufacture a stator, the order of the aforementioned steps S3 and S4 may be altered.

### < Second Embodiment >

For the stator manufacturing apparatus 20 and stator manufacturing method according to the first embodiment described above, a case is described in which the rotation limiting members 74 are used to brace the central portion core pieces 4X of the stator core 2 to be non-rotatable and substantially "V"-shaped skew as seen in the diametric direction is formed. In the present disclosure, however, the shape of the skew of a stator being manufactured is not limited to the substantial "V" shape. Accordingly, described below are an apparatus for manufacturing a stator and a method for manufacturing a stator according to a second embodiment of the present disclosure, with which skew is formed such that slots in the stator being manufactured extend to slant in one direction relative to the axial direction of the stator.

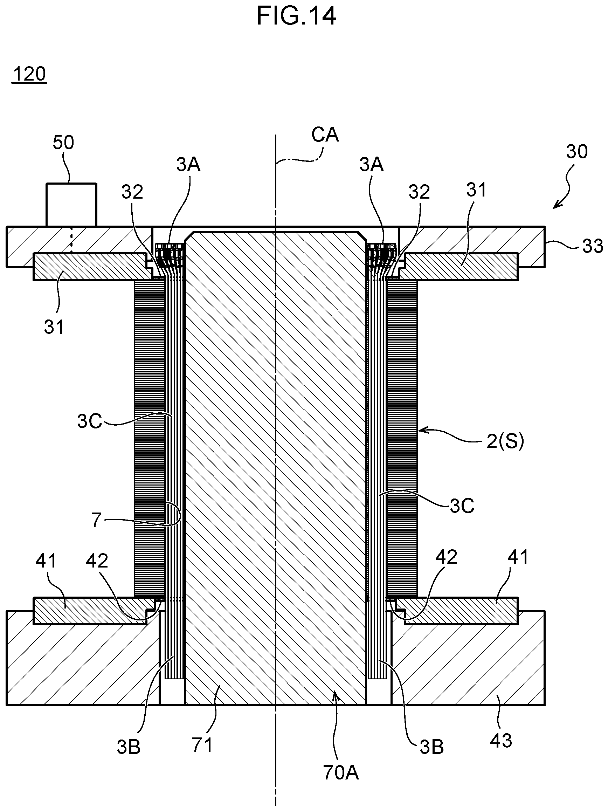

Fig. 14 is a schematic sectional diagram showing an example of the apparatus for manufacturing a stator according to the second embodiment of the present disclosure. A stator manufacturing apparatus 120 according to the present embodiment may have structure similar to the stator manufacturing apparatus 20 according to the first embodiment, except lacking the rotation limiting members 74 and the second activation mechanism 60. Accordingly, structures of portions of the stator manufacturing apparatus 120 with similar structures to the stator manufacturing apparatus 20 are assigned the same reference symbols and are not described.

As mentioned above, the stator manufacturing apparatus 120 according to the present embodiment does not include the rotation limiting members 74. Therefore, at a core piece alignment jig 70A according to the present embodiment, the core piece alignment jig main body 71 may be formed to be provided only with the guide protrusion 72. Thus, all of the core pieces 4 fitted round the core piece alignment jig 70A are stacked in rotatable states.

The stator manufacturing apparatus 120 need not include the second activation mechanism 60. Therefore, the second coil ends 3B are held in a state in which the second coil holding jig 40 is fixed at the second base 43. The stator manufacturing apparatus 120 according to the present embodiment may also include the second activation mechanism 60, in which case the first coil holding jig 30 that is rotated by the first activation mechanism 50 and the second coil holding jig 40 that is rotated by the second activation mechanism 60 are rotated in opposite directions.

When the stator manufacturing apparatus 120 according to the present embodiment is used to manufacture a stator, executing the same steps as the steps shown in Fig. 12 is sufficient. More specifically, first, the core piece alignment jig 70A including the guide protrusion 72 but not including the rotation limiting members 74 is prepared (step S1). Then the core pieces 4 are stacked by being successively supplied to one end of the core piece alignment jig 70A (step S2). In the stack body S structured by the plural core pieces 4, the slots 7 extend straight in the axial direction. The core pieces 4 do not have structures for fixing the adjacent core pieces 4 to one another, for example, crimp portions or the like, but are simply stacked in the stack body S.

After the desired number of the core pieces 4 have been supplied to the core piece alignment jig 70A and the stack body S of the core pieces 4 has been formed, the flat wire coils 3 are inserted into the slots 7 extending in the axial direction of the stack body S (step S3). The first and second coil holding jigs 30 and 40 are disposed at the two end portions of the stack body S (step S4). The first and second holding pawls 32 and 42 are operated and moved to the holding positions, and the first and second coil ends 3A and 3B are held by the first and second holding pawls 32 and 42 (step S5).

The first activation mechanism 50 is operated and rotates the first coil holding jig main body 31 in one direction (for example, the counterclockwise direction). A rotation angle (skew angle) at this time may be set to, for example, 5° to 30° for a two-pole motor. Because the second coil holding jig main body 41 is fixed at the second base 43, the flat wire coils 3 are deformed by the above-mentioned rotation of the first coil holding jig main body 31 to linear shapes in directions that are slanted relative to the axial direction, as seen in the diametric direction, based at the second coil ends 3B. Accompanying the deformation of the flat wire coils 3, the core pieces 4 also rotate, forming the skew in the stack body S and the flat wire coils 3 (step S6).

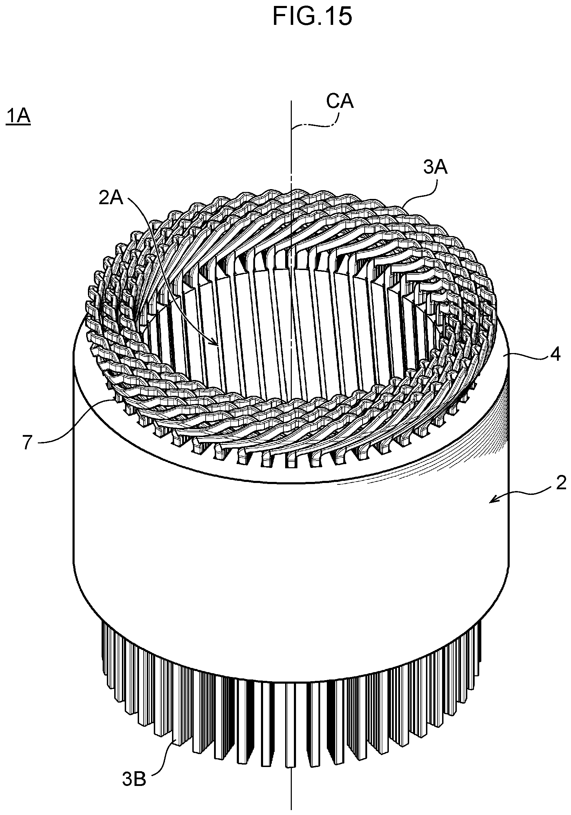

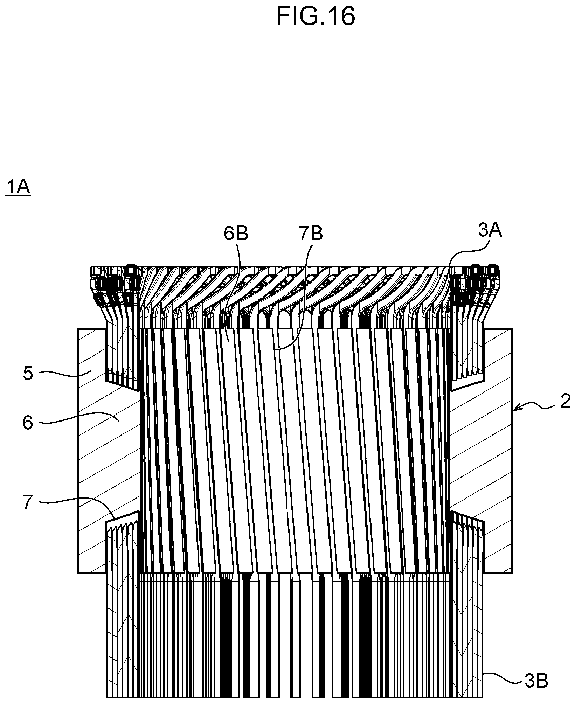

Fig. 15 is a perspective view showing an example of a stator manufactured using the apparatus for manufacturing a stator shown in Fig. 14, and Fig. 16 is a sectional diagram of the stator shown in Fig. 15. In a stator 1A fabricated by the sequence of steps described above, as shown in Fig. 15 and Fig. 16, shapes of the teeth 6, the slots 7 and the slot insertion portions 3C of the flat wire coils 3 differ from the stator 1 described above. More specifically, as can be seen from the extension directions of inner side end portions 6B of the teeth 6 and gaps 7B of the slots 7 shown in Fig. 16, the skew is formed linearly in a direction that is slanted relative to the axial direction as seen in the diametric direction. Therefore, a stator that reduces cogging torque, torque ripple and the like compared to a stator in which skew is not formed may be provided by a simple method without causing a fall in insulation resistance of the flat wire coils 3. Thus, according to the stator manufacturing apparatus 120 and method for manufacturing a stator according to the present embodiment, the same effects as described for the first embodiment may be provided.

The present disclosure is not limited by the embodiments described above and numerous modifications may be embodied within a scope not departing from the gist of the present disclosure. All these modifications are to be encompassed by the technical idea of the present disclosure. In the present disclosure, there may be only one of each structural element and there may be two or more, provided no conflicts result.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and similar referents in the context of describing the disclosure (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the disclosure and does not pose a limitation on the scope of the disclosure unless otherwise claimed. No language in the specification should be construed as indicating any non-claimed element as essential to the practice of the disclosure.

Preferred embodiments of this disclosure are described herein, including the best mode known to the inventors for carrying out the disclosure. Variations of those preferred embodiments may become apparent to those of ordinary skill in the art upon reading the foregoing description. The inventors expect skilled artisans to employ such variations as appropriate, and the inventors intend for the disclosure to be practiced otherwise than as specifically described herein. Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein or otherwise clearly contradicted by context.

## Claims

1. An apparatus for manufacturing a stator including a stator core in which a plurality of core pieces formed of electrical steel sheets are stacked and coils inserted into slots of the stator core, the apparatus comprising:
a pair of coil holding jigs that hold, of the coils disposed in the slots, coil ends projecting from both axial direction end portions of the stator core; and
an activation mechanism for forming a skew in the stator, the activation mechanism rotating at least one of the pair of coil holding jigs holding the coil ends in a circumferential direction of the stator.

2. The apparatus for manufacturing a stator according to claim 1, wherein:
the activation mechanism rotates both of the pair of coil holding jigs holding the coil ends in the circumferential direction of the stator; and
the apparatus for manufacturing a stator further includes a rotation limiting member that, of the plurality of core pieces, braces a predetermined number of the core pieces disposed at an axial direction central portion of the stator core so as to be non-rotatable.

3. The apparatus for manufacturing a stator according to claim 1, wherein:
the stator core includes an annular yoke and a plurality of teeth provided at an inner periphery face of the yoke, and the slots are provided between adjacent teeth of the plurality of teeth; and
the apparatus for manufacturing a stator further includes a core piece alignment jig that is insertable into a central hole of the stator core, the central hole being formed in the axial direction of the stator core, and that braces the plurality of core pieces such that the slots of the stator core extend in the axial direction of the stator core.

4. The apparatus for manufacturing a stator according to claim 3, wherein:
the core piece alignment jig includes a cylindrical core piece alignment jig main body and a guide protrusion, the guide protrusion being provided at an outer peripheral face of the core piece alignment jig main body and engaging with inner side end portions of the teeth; and
the guide protrusion can be accommodated inside the core piece alignment jig main body.

5. The apparatus for manufacturing a stator according to claim 4, wherein:
the activation mechanism rotates both of the pair of coil holding jigs holding the coil ends in the circumferential direction of the stator; and
the core piece alignment jig main body includes a rotation limiting member at a length direction central portion of the core piece alignment jig main body that, of the plurality of core pieces, braces a predetermined number of the core pieces disposed at an axial direction central portion of the stator core so as to be non-rotatable.

6. The apparatus for manufacturing a stator according to any one of claims 1 to 5, wherein at least one of the pair of coil holding jigs includes:
a coil holding jig main body disposed at the axial direction end portion of the stator coil; and
a plurality of holding pawls that are provided at the coil holding jig main body movably in the diametric direction of the stator core, that are inserted into gaps between the coil ends inserted into adjacent slots of the slots, and that hold the coil ends.

7. The apparatus for manufacturing a stator according to any one of claims 1 to 5, wherein:
the stator core includes:
insulating members disposed between the slots and the coils inserted into the slots; and
an insulating member support piece that is provided at at least one end portion of the stator core and supports the insulating members,
the insulating member support piece includes:
an annular base portion;
a plurality of support pawls provided at an inner peripheral face of the base portion, the support pawls being disposed between the insulating members inserted into adjacent slots of the slots and the support pawls supporting end portions of the insulating members that extend outside the slots; and
a support piece holding portion provided at the base portion, and
at least one of the pair of coil holding jigs includes an engaging member that engages with the support piece holding portion of the insulating member support piece.

8. A method for manufacturing a stator, the method comprising:
a step of forming a stack body in which a plurality of core pieces formed of electrical steel sheets are stacked;
a step of inserting coils into slots of the stack body;
a step of holding coil ends of the coils inserted into the slots with a coil holding jig, the coil ends projecting from both of axial direction end portions of the stack body; and
a step of forming a skew in the stack body and the coils, including rotating the coil holding jig.

9. The method for manufacturing a stator according to claim 8, further comprising a step of bracing, of the plurality of core pieces, a predetermined number of the core pieces disposed at an axial direction central portion of the stack body so as to be non-rotatable, including using a rotation limiting member.

10. A stator, comprising:
a stator core in which a plurality of core pieces formed of electrical steel sheets are stacked; and
flat wire coils inserted into slots of the stator core, wherein:
each slot of the stator core is formed substantially in a "V" shape that extends in an axial direction of the stator core at an axial direction central portion of the stator core, regions of the slot that are adjacent to both axial direction ends of the axial direction central portion being slanted to extend in directions intersecting the axial direction, and
at least three of the core pieces structure the axial direction central portion.

11. The stator according to claim 10, further comprising:
insulating members disposed between the slots and the flat wire coils inserted in the slots; and
an insulating member support piece that is provided at at least one end portion of the stator core and supports the insulating members, wherein the insulating member support piece includes:
an annular base portion;
a plurality of support pawls provided at an inner peripheral face of the base portion, the support pawls being disposed between the insulating members inserted into adjacent slots of the slots and supporting end portions of the insulating members that extend outside the slots; and
a support piece holding portion provided at the base portion.

12. The stator according to claim 11, wherein the support piece holding portion includes a plurality of recess portions or protrusions provided at an outer peripheral face of the base portion.
